# EUROPÄISCHE PATENTANMELDUNG

(11) **EP 2 953 183 A2**
(43) Veröffentlichungstag der Anmeldung: **09.12.2015**
(21) Anmeldenummer: 15001459.5
(22) Anmeldetag: 15.05.2015
(51) Int. Cl.: H01M 2/10, B60L 11/18, H01M 2/20, H01M 10/48, H01R 11/28, H02J 7/00, H01M 10/42, H01M 10/0565, H01M 10/0525

(54) **STECKSYSTEM ZUR KOMBINATION VON LITHIUM- AKKUMULATOREN UND DEREN VERBINDUNG ZU EINEM BATTERIESYSTEM**

(30) Priorität: 06.06.2014 DE 102014008134
(71) Anmelder: Lang, Günter, 73249 Wernau (DE)
(72) Erfinder: Lang, Günter, 73249 Wernau (DE)
(74) Vertreter: Ludewig, Rita

(57) **Zusammenfassung**

Stecksystem zur Kombination von Lithium- Polymer- Akkumulatoren und deren Verbindung zu einem Batteriesystem. Es war ein Behältnis zur Montage eines Batteriesystems zu finden, in dem ein Nichtfachmann mehrere Li-Po-Akkus mit Strom- und Balanceranschluß anordnen und nur durch Steckverbindungen miteinander verbinden kann, dessen Steckverbindungen nicht zu vertauschen sind, eine leichte Montage und Demontage und einen Einzelteiltransport per Flugzeug vorschriftgemäß ermöglichen. Die Lösung ist ein Batteriegehäuse, bestückt mit handelsüblichen Li-Po-Akkus, deren Balancerstecker mit einer Balancerschiene mit kompatiblen Steckerbuchsen mit zentralem Balancerkabel, und deren Stromausführungsstecker über Stromschienen mit Kopplungselementen und kompatiblen Steckbuchsen mit einem zentralen Stromausführungskabel zu einem Batteriesystem zu verbinden sind und das Batteriesystem über das zentrale Balancerkabel durch Steckverbindung an eine Ladestation oder jeweils durch Steckverbindung an einen Verbraucher anzuschließen ist und im Batteriegehäuse eine Schaltung anzuordnen ist, die als Balancer jeder Zelle in den Li-Po-Akkus nutzbar ist und die Speicher- Leistungskapazitäten durch Auswahl der Art und Anzahl der Li-Pol-Akkus dem Anwendungsbereich anzupassen ist.

## Beschreibung

Die Erfindung betrifft ein Stecksystem zur Kombination von Lithium- Polymer-Akkumulatoren und deren Verbindung zu einem Batteriesystem zum elektrischen Antrieb eines Verbrauchers, insbesondere als Antrieb von Elektrofahrrädern oder zur Nachrüstung von Fahrädern mit einem Elektroantrieb.

Es sind eine Vielzahl von wieder aufzuladenden Batteriesystemen mit Lithium- Polymer-Akkumulatoren bekannt, die zum Antrieb von unterschiedlichen Verbrauchern, zum Beispiel zum Antrieb von Solarfahrzeugen, Elektroautos, Modell- Flugzeugen und - Fahrzeugen, Mobiltelefonen, MP3- Playern und ortsfesten Kraftwerksenergiespeichern verwendet werden. Der Lithium- Polymer- Akkumulator ist ein wieder aufladbarer Energiespeicher, dessen negative Elektrode aus Graphit, die positive aus Lithium- Metalloxid besteht, und einen Elektrolyten aufweist, der aus einer festen bis gelartigen Folie auf Polymerbasis besteht. Diese Bestandteile des Akkumulators werden als Schichtfolien mit einer Stärke von weniger als 100 Mikrometern als Rund und Flachzellen hergestellt. Da der Elektrolyt in einem gallertartigen Polymer gebunden und nicht flüssig ist wie beispielsweise bei Lithium- Ionen - Akkumulatoren, ist kein festes Gehäuse erforderlich, um die technischen Strukturen sicherzustellen. Zur Erhöhung der Nennspannung bestehen diese Batterien aus mehreren in Reihe geschalteten Einzelzellen. Fertigungsbedingt weisen die Einzelzellen Schwankungen in der Kapazität und dem Innenwiderstand auf. Das führt beim Laden und Entladen der Zellen dazu, daß die Zellen kritische Ladezustände einnehmen können. So besteht bei der Entladung die Gefahr der Tiefentladung und beim gemeinsamen Laden der Zellen wird nicht die gleiche Lade- Entspannung erreicht, was wiederum zur Überladung einzelner Zellen führen kann. Um diese kritischen Zustände zu vermeiden, werden sogenannte Balancer eingebaut, die die kritischen Ladezustände in den einzelnen Zellen ausbalancieren.

Die Lithium- Polymer- Akkus haben jedoch den Nachteil, daß sie mechanisch, elektrisch und thermisch empfindlich sind. Beschädigungen, Überladen, Tiefentladen, zu hohe Ströme, Betrieb bei zu hohen oder zu niedrigen Temperaturen und langes Lagern in entladenem Zustand schädigen oder zerstören die Zelle. Bei Überladung können sich die Akkus aufblähen und verpuffen und dabei entzünden. Diese gefährlichen Eigenschaften der Lithium- Polymer-Akkumulatoren führten insbesondere beim Transport in Flugzeugen zu schweren Flugzeugunglücken. Es wurde festgestellt, daß die Lithium- Polymer- Akkumulatoren bei ungeeigneter Verpackung Temperaturen bis zu 600° C erreichen und nicht nur sich selbst sondern auch ihre Umgebung entzünden können.

Aus vorgenannten Gründen wurden Standards für den Flugzeugtransport festgelegt. So dürfen derartige Akkumulatoren nur noch mit einer Leistung bis maximal 100Wh und nur in vom Hersteller mitgelieferten oder im Handel erhältlichen speziellen Akkupacks, im Flugzeug transportiert werden. Die Akkupacks für Verbrauchergeräte enthalten eine für den jeweiligen Akku entwickelte Schutzschaltung gegen Unterspannung und Überstrom, wobei das Zell- und Lademanagement im Verbraucher integriert sein sollte und ein spezielles Lithium- Akku-Ladegerät zur Verfügung stehen muß.

Für den Benutzer eines Verbrauchergerätes, zum Beispiel eines elektrisch betriebenen Mountainbikes, oder eines Modellflugzeugs, der im Ausland fahren oder an einem Wettbewerb teilnehmen will, treten unter den beschriebenen Bedingungen Transportprobleme auf, die nur mit großem Aufwand zu realisieren sind. Die Lithium- Polymer- Akkumulatoren können zunächst in den speziellen Herstellerverpackungen einzeln transportiert werden. Dazu müssen die aus diesen bestehenden Batteriesysteme demontiert und vor Ort wieder bestückt und elektrisch verbunden werden. Das ist für einen Nichtfachmann kompliziert, zeitaufwendig und gefährlich. Außerdem verfügt nicht jeder Benutzer über die dazu erforderlichen elektrotechnischen Kenntnisse. Bereits bei der Demontage können bei nicht fach- und sachgerechter Vorgehensweise die Akkus Schaden nehmen, wenn Kontakte falsch gepolt oder durch Kontakt gegenpoliger Drähte, Kurzschlüsse erzeugt werden. Dabei besteht nicht nur die Gefahr der Zerstörung für die Akkumulatoren sondern auch für die Person, die gesundheitsschädliche Stromschläge erleiden kann. Deshalb ist für die bisherigen Batteriesysteme als Kompaktpaket ein Transport als Luftfracht nicht mehr zulässig.

Es war deshalb Aufgabe der Erfindung, ein Behältnis zur Montage eines Batteriesystems zu finden, in dem ein elektrotechnischer Nichtfachmann mehrere Lithium- Polymer-Akkumulatoren mit Strom- und Balanceranschluß anordnen und ausschließlich durch Steckverbindungen miteinander verbinden kann, dessen Steckverbindungen nicht irrtümlich zu vertauschen sind, das leichtgewichtig, platzsparend und kostengünstig ist und dem Benutzer eine leichte und zeitsparende Montage und Demontage des Batteriesystems ermöglicht, dessen Einzelteiltransport insbesondere per Flugzeug gefahrlos und vorschriftgemäß möglich ist, dessen Gehäuseteile ausschließlich durch Schraub-, Klemm- und Schiebetechnik zu verbinden sind und schließlich eine elektrisch hochbelastbare und sicherheitstechnisch hochwertige Steckverbindung für das zentrale Stromausführungskabel des Batteriesystems zum Verbraucher zu schaffen, dessen stromführende Teile wie Pole und Buchsen bei Verschleiß austauschbar sind, ohne die Steckverbindung gänzlich wechseln zu müssen.

Die Aufgabe wird, gemäß Anspruch 1, dadurch gelöst, daß ein zweiteiliges Batteriegehäuse durch den Benutzer mit mehreren der handelsüblichen Lithium- Polymer- Akkumulatoren zu bestücken ist und die mehrpoligen Balancerstecker über eine Balancerschiene und daran angeordnete, mit den Balancersteckern kompatible mehrpolige Steckerbuchsen mit einem zentralen Balancerkabel, die zweipoligen Stecker über Stromschienen mit Kopplungselementen und zu den zweipoligen Steckern kompatiblen Steckbuchsen mit einem zentralen Stromausführungskabel durch Steckverbindungen zu einem Batteriesystem zu verbinden sind und das Batteriesystem über das zentrale Balancerkabel mit einem Balancerstecker durch Steckverbindung an eine Ladestation oder über einen am Stromausführungskabel angeschlossenen Anschlußstecker jeweils durch Steckverbindung an einen Verbraucher anzuschließen ist.

Der konstruktive Aufbau des erfindungsgemäßen Stecksystems zur Kombination von mehreren Lithium- Polymer- Akkumulatoren zu einem Batteriesystem hat den Vorteil, daß die Montage und Demontage mehrere Lithium- Polymer- Akkumulatoren mit Strom- und Balanceranschluß getrennt zu einem Batteriesystems der beschrieben Art auch von einem elektrotechnischen Nichtfachmann erfolgen kann. Das ist insbesondere durch die Gestaltung des Batteriegehäuses in mehrere Batteriefächer und durch die Anordnung einer Balancerschiene mit mehrpoligen Steckerbuchsen möglich, an die der Balanceranschluß der Akkus und ein zentrales Balancerkabel und der Anschluß der Stromausführungskabel über Stromschienen, deren Kopplungselemente und Steckbuchsen bis zum zentralen Stromausführungskabel ausschließlich durch Steckverbindungen erfolgen kann, deren Polungen nicht irrtümlich vertauscht werden können. Dies verhindert bei der Demontage und Montage, daß bei nicht fach- und sachgerechter Vorgehensweise die Akkus Schaden nehmen, wenn Kontakte falsch gepolt oder durch Kontakt gegenpoliger Drähte, Kurzschlüsse erzeugt werden. Es wird nicht nur die Gefahr der Zerstörung der Akkumulatoren beseitigt. Es werden auch gesundheitsschädliche Schäden für Personen vermieden, die durch Stromschläge bei Kurzschlüssen entstehen.

Besonders hervorzuheben ist es, daß im Batteriegehäuse eine Schaltung anzuordnen ist, die als Balancer, zur Spannungsmessung, zum Stromausgleich und somit zum Aufladen der vollen Kapazität jeder einzelnen Zelle in den Lithium- Polymer- Akkumulatoren während des Ladevorgangs, zu nutzen ist. Das hat den Vorteil, daß der Benutzer zum Aufladen des Batteriesystems nicht vom Vorhandensein eines Ladegerätes mit einem eingebauten Balancer oder von einem separaten Balancer abhängig ist. Das Management des Balancers kann separat im Batteriegehäuse angeordnet oder auch auf der Balancerschiene aufgebracht sein.

Hervorzuheben ist außerdem, daß die Speicher- und Leistungskapazitäten des Batteriesystems durch Auswahl der Art und Anzahl der Lithium- Polymer- Akkumulatoren dem jeweiligen Anwendungsbereich anzupassen ist, wobei die elektrischen Verbindungen nach Bedarf durch Reihen- oder Parallelschaltung schaltbar sind. Auf diese Weise kann der Benutzer eines Verbrauchergerätes die Leistungsparameter des Batteriesystems mit weiteren Lithium-Polymer- Akkumulatoren durch spätere Ergänzungen erweitern. Es ist somit eine stufenweise Ergänzung von Lithium- Polymer- Akkumulatoren und eine Anpassung des Batteriesystems an die erforderlichen Leistungsparameter unterschiedlicher Verbraucher möglich.

Selbstverständlich können an Stelle der Lithium- Polymer- Akkumulatoren auch andere handelsübliche lithiumhaltige Akkumulatoren in das erfindungsgemäße Batteriegehäuse eingesetzt und benutzt werden.

Sehr vorteilhaft und benutzerfreundlich ist das Batteriegehäuse nach den Ansprüchen 2 bis 7, das vergleichsweise leichtgewichtig, platzsparend und kostengünstig ist und dem Benutzer eine leichte und zeitsparende, insbesondere aber auch ungefährliche Montage und Demontage des Batteriesystems ermöglicht.

Auf diese Weise ist der Einzelteiltransport der Lithium- Polymer- Akkumulatoren in den vom Hersteller mitgelieferten oder im Handel nachträglich erworbenen Spezialverpackungen und separat des erfindungsgemäß ausgestatteten Batteriegehäuses insbesondere per Flugzeug gefahrlos und vorschriftsgemäß gewährleistet.

Besonders hervorzuheben ist die erfindungsgemäße Steckverbindung zwischen einem zentralen Stromausführungskabel und einem Verbraucher, gemäß des Anspruchs 8, dadurch gekennzeichnet, daß die Verbindung zwischen einem zentralen Stromausführungskabel des Batteriesystems und einem Verbraucher mit einer Steckverbindung erfolgt, die aus einem Anschlußstecker und einer kompatiblen Anschlußdose gebildet ist, die ein Steckergehäuse mit zwei nebeneinander getrennt angeformten, Hülsen mit unterschiedlichen Außenkonturen und ein dazu kompatibles Buchsengehäuse mit zwei nebeneinander eingeformten Zylindern mit jeweils unterschiedlichen Außenkonturen aufweisen, daß in dem Steckergehäuse und dem Buchsengehäuse jeweils stirnseitig zwei getrennt nebeneinander eingeformte Sechskante zur Aufnahme von Drahthaltern angeordnet sind, die jeweils mit einem Verschlußteil mit nach außen angeformten Kabelführungen zu verschließen sind und daß in dem Steckergehäuse an jedem Drahthalter von außen lösbar zu montierende Polstifte und in dem Buchsengehäuse von außen lösbar zu montierende Steckbuchsen von den angeformten, Hülsen und den kompatiblen Zylindern komplett umhüllt, angeordnet sind.

Durch diese Gehäusegestaltung und die Form der stromführenden Teile steht dem Benutzer eine elektrisch hochbelastbare und sicherheitstechnisch hochwertige Steckverbindung für ein Batteriesystem und einem Verbraucher zur Verfügung
Von erheblichem Vorteil ist des weiteren die Gestaltung der einzusetzenden Stromführenden Teile nach den Ansprüchen 9 und 10, die dadurch gekennzeichnet sind, daß der Drahthalter die Form einer Sechskantmutter aufweist, in deren Wand ein Gewindeloch radial angeordnet ist, in dem jeweils ein Draht des zentralen Stromausführunskabels mit Hilfe einer Schraube zu befestigen ist und an deren Stirnseite in axialer Richtung ein Außengewinde angeformt ist und daß der Pohlstift mit einem aufgesteckten Federelement und einer endseitigen Sechskantöffnung sowie mit einem an der gegenüberliegenden Stirnseite angeordneten Innengewinde versehen ist und die Steckbuchse mit einem endseitigen Innengewinde und einer innerhalb der Steckbuchse angeordneten Sechskantöffnung ausgestattet ist, wobei die Pohlstifte und die Steckbuchsen mittels des jeweiligen Innengewindes von außen und lösbar auf das Außengewinde jedes Drahthalters innerhalb der Gehäusehülsen des Gehäusesteckers und innerhalb der Zylinder der Gehäusebuchsen aufzuschrauben sind.

Die Anordnung der stromführenden Teile wie Pole und Buchsen in der Steckverbindung gewährleistet bei Verschleiß, deren Austausch, ohne die Steckverbindung gänzlich wechseln zu müssen. Besonders ist auch zu erwähnen, daß beim Wechsel verschlissener, stromführender Teile die Drahtverbindung zum zentralen Stromausführungskabel des Batteriesystems nicht gelöst werden muß.

Die Erfindung soll nachstehend anhand von zwei Ausführungsbeispielen näher beschrieben werden. Die Zeichnungen zeigen dabei in
- Fig.1: Draufsicht auf das bestückte Aufnahmeteil des erfindungsgemäßen Batteriegehäuses im offenen Zustand,
- Fig.2: die Draufsicht auf das Verschlußteil des erfindungsgemäßen Batteriegehäuses im offenen Zustand,
- Fig.3: perspektivische Ansicht eines Lithium- Polymer- Akkumulators mit Balancerkabel mit mehrpoligem Balancerstecker und Stromausführungskabel mit zweipoligem Stecker,
- Fig.4: Vorderansicht des leeren Steckergehäuses,
- Fig.5: Draufsicht auf das leere Steckergehäuse von der Steckseite,
- Fig.6: Draufsicht auf das leere Buchsengehäuse von der Steckseite,
- Fig.7: Voderansicht des leeren Buchsengehäuses,
- Fig.8: Seitenansicht des Verschlußteils,
- Fig.9: Draufsicht auf das Verschlußteil von der Seite der Kabelführung,
- Fig.10: Draufsicht auf das Verschlußteil von der Seite des Gehäusesitzes,
- Fig.11: Vorderansicht einer leeren Steckverbindung aus Anschlußstecker, Anschlußbuchse und Verschlußelementen,
- Fig.12: Seitenansicht des Polstifts mit aufgesetztem Federelement,
- Fig.13: Seitenansicht einer Buchse,
- Fig.14: Draufsicht auf den Drahthalter,
- Fig.15: Seitenansicht des Drahthalters

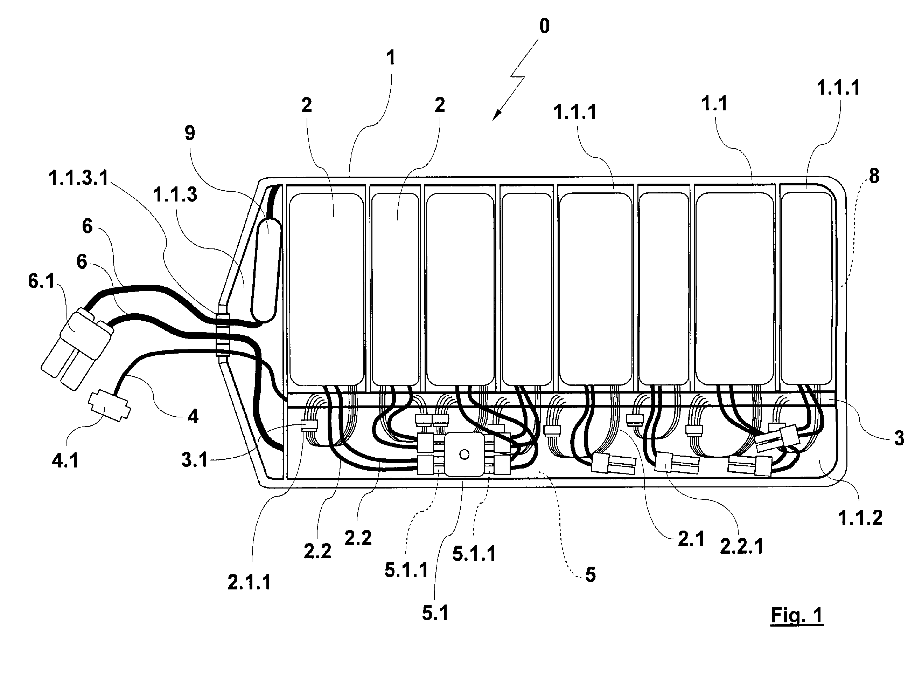

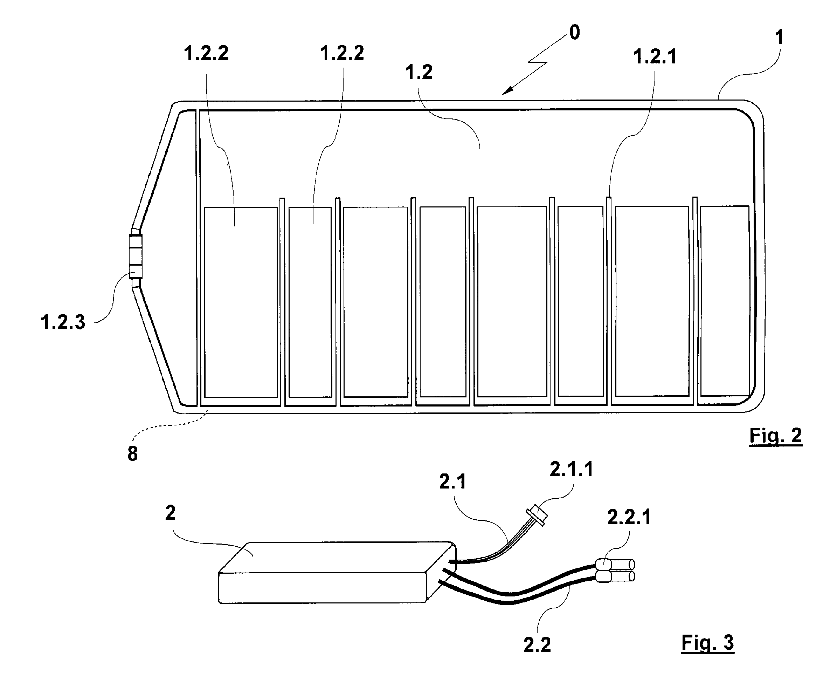

Im Ausführungsbeispiel, gemäß Fig.1, wird die Draufsicht auf ein offenes Aufnahmeteil 1.1. des Batteriegehäuses 1 dargestellt, das im wesentlichen eine rechteckige Form aufweist und an einer Schmalseite trapezförmig verläuft. In dem Aufnahmeteil 1.1 sind vorzugsweise acht Batteriefächer 1.1.1 angeordnet, die beispielsweise, gemäß Fig.3 mit einem Lithium-Polymer- Akkumulator 2 abwechselnd mit jeweils vier und fünf Zellen und je einem Balancerkabel 2.1 mit einem vierpoligen und fünfpoligen Balancerstecker 2.1.1 und einem Stromausführungskabel 2.2 mit einem zweipoligen Stecker 2.2.1 bestückt sind. Unterhalb der Batteriefächer 1.1.1 ist eine Balancerschiene 3 beispielsweise als Platine ausgeführt auf der die elektrischen Verbindungen für, vorzugsweise abwechselnd vier dreipoligen und vier fünfpoligen Steckerbuchsen 3.1 angeordnet sind, deren Anschlüsse in ein zentrales Balancerkabel 4 mit einem mehrpoligen Balancerstecker 4.1 münden, das endseitig aus der Balancerschiene 3 herauszuführen ist. Außerdem kann vorzugsweise auf der Platine der Balancerschiene 3 eine, in den Zeichnungen nicht näher dargestellte, elektrische Verbindung eines Balancers zu den Balancerkabeln 2.1 aufgebracht werden, die beim Ladevorgang in den einzelnen Zellen der Akkumulatoren 2 die Spannung misst, einen Stromausgleich durchführt und gewährleistet, daß die Zellen alle mit der vollen Kapazität aufgeladen werden. Die Anordnung dieses Balancers kann bei Bedarf auch an anderer Stelle des Gehäuses angeordnet werden oder entfallen, wenn der Benutzer bereits ein spezielles Ladegerät mit eingebautem Balancer besitzt und dieses nutzen will. Unterhalb der Balancerschiene 3 ist der Aufnahmebereich 1.1.2 angeordnet, in dem in den Zeichnungen nicht näher dargestellte Stromschienen 5 verlaufen, an denen vorzugsweise zwei Kopplungslemente 5.1 angeordnet sind, wobei der Übersichtlichkeit halber nur ein Kopplungselement 5.1 in der Zeichnung dargestellt ist. Die Kopplungselemente 5.1 verfügen über eine Anzahl von Steckbuchsen 5.1.1, die mit je vier der zweipoligen Stromsteckern 2.2.1 der Lithium- Polymer-Akkumulatoren 2 kompatibel sind und je nach Bedarf mit den zweipoligen Steckern 2.2.1 der Stromausführungskabel 2.2 in Reihe oder parallel mit den kompatiblen Steckbuchsen 5.1.1. durch Steckverbindung zu verbinden sind. Die Stromschienen 5 sind neben den Kopplungselementen 5.1 mit einem zentralen Stromausführungskabel 6 mit einem Anschlußstecker 6.1 verbunden, der endseitig aus dem Aufnahmebereich 1.1.2 herausgeführt wird. Das zentrale Stromausführungskabel 6 ist in einem Kabelausführungsbereich 1.1.3 durch eine Sicherung 8 überbrückt. Das zentrale Balancerkabel 4 mit dem mehrpoligen Balancerstecker 4.1 und das zentrale Stromausführungskabel 6 mit dem Anschlußstecker 6.1 werden über den Kabelausführungsbereich 1.1.3 und eine Kabelausführungsleiste 1.1.3.1 aus dem Batteriegehäuse 1 herausgeführt. Auf die Konturkanten des Aufnahmeteils 1.1 werden, in den Zeichnungen nicht näher dargestellte Dichtungs- und Verschlußelemente 8 aufgesteckt. Gemäß Fig.2 ist der Verschlußteil 1.2 des Batteriegehäuses 1 mit vorzugsweise acht Trennwänden 1.2.1 ausgestattet zwischen denen Isolierflächen 1.2.2 angeordnet sind. Am trapezförmig auslaufenden Ende des Verschlußteils 1.2 ist eine Kabelausführungsleiste 1.2.3 und auf den Konturkanten des Verschlußteils 1.2 sind Dichtungs- und Verschlußelemente 8, die mit den darunterliegenden Teilen des Aufnahmeteils 1.1 kompatibel sind, aufgesteckt. Der Verschlußteil 1.2 wird nun auf den Aufnahmeteil 1.1 des Batteriegehäuses 1 aufgesteckt und die Dichtungs- und Verschlußteile 8 ineinander gesteckt und verriegelt. Das erfindungsgemäß komplettierte Batteriesystem 0 kann nun über das aus dem Batteriegehäuse 1 herausragende zentrale Stromausführungskabel 6 mi einem Anschlußstecker 6.1 an einen Verbraucher beispielsweise an eine elektrisch angetriebenes Fahrrad angeschlossen und durch das Batteriesystem 0 betrieben werden. Wenn die Leistung des Batteriesystems 0 nachläßt, kann es vom Verbraucher abgenommen und mit dem aus dem Batteriegehäuse 1 herausragenden zentralen Balancerkabel 4 an ein entsprechendes Ladegerät angeschlossen und wieder aufgeladen werden.

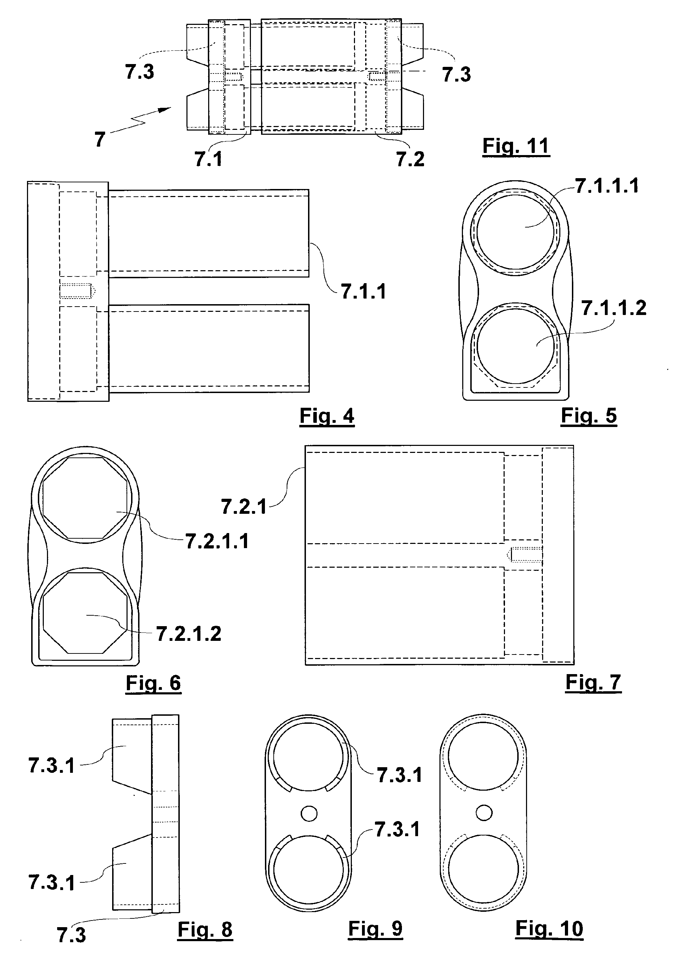

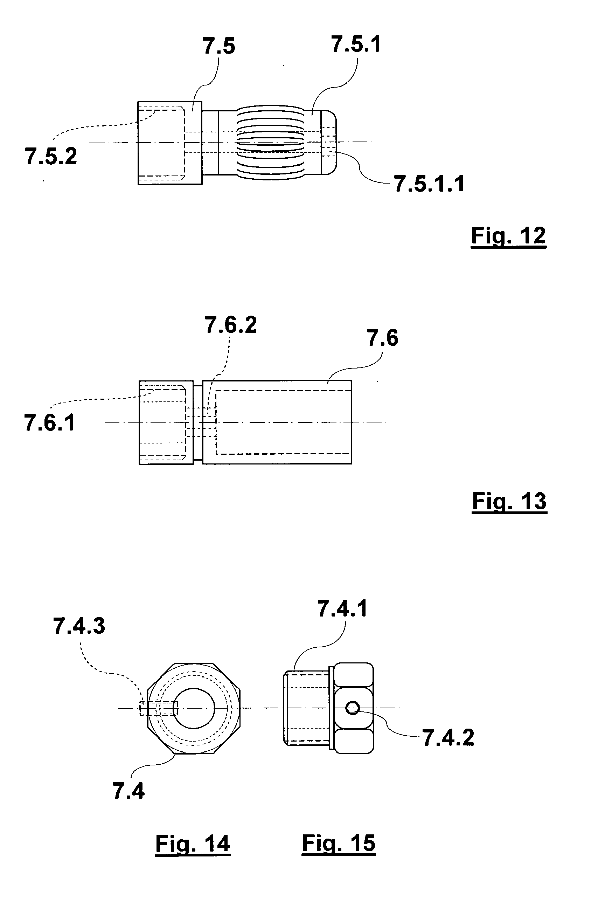

Im zweiten Ausführungsbeispiel ist von dem zuvor beschriebenen Batteriegehäuse 1 und dessen Ausstattung auszugehen. Als Anschlußelement zwischen dem Batteriesystem 0 und einem Verbraucher wurde in diesem Beispiel eine Steckverbindung 7, gemäß Fig. 11 mit einem Anschlußstecker 7.1 an dem zentralen Stromausführungskabel 6 angeschlossen und eine Anschlußdose 7.2 am Antrieb des Verbrauchers installiert. Der Anschlußstecker 7.1 der Steckverbindung besteht, nach Fig.4 und Fig.5 aus einem Steckergehäuse 7.1.1 mit zwei nebeneinander getrennt angeformten Hülsen 7.1.1.1 und 7.1.1.2 mit unterschiedlichen Außenkonturen. Stirnseitig ist jeweils nebeneinander ein Sechskant zur Aufnahme eines Drahthalters 7.4 eingeformt. Die Anschlußdose 7.2 besteht, nach Fig.6 und Fig.7 aus einem durchgehenden Buchsengehäuse 7.2.1 in das nebeneinander getrennt zwei Zylinder 7.2.1.1 und 7.2.1.2 mit unterschiedlichen Innenkonturen eingeformt sind. Stirnseitig ist in dem Buchsengehäuse 7.2.1 getrennt nebeneinander je ein Sechskant zur Aufnahme eines Drahthalters 7.4 eingeformt. Das Steckergehäuse 7.1.1 und das Buchsengehäuse 7.2.1 werden die Kabelein- und Ausführungsenden, gemäß Fig.8, Fig.9 und Fig.10 mit je einem Verschlußteil 7.3 mit angeformten Kabelführungen 7.3.1 vorzugsweise durch verschrauben verschlossen. Die Gehäuseteile der Steckverbindung 7 bestehen vorzugsweise aus einem hochbelastbaren, verschleißarmen Kunststoff. Fig.14 und Fig.15 zeigen einen Drahthalter 7.4 der vorzugsweise die Form einer Sechskantmutter aufweist, an deren einer Stirnfläche ein Außengewinde 7.4.1 angeformt ist. In die Wand der Sechskantmutter ist radial ein Gewindeloch 7.4.2 angeordnet in dem eine Schraube 7.4.3 zum befestigen eines der jeweiligen Kabeldrähte einzuschrauben ist. Fig. 12 zeigt einen Polstift 7.5. Die Polstifte 7.5 sind zylindrische Hohlkörper, an deren einem Ende ein Innengewinde 7.5.2 angeordnet ist und auf deren unterer Hälfte ein Federelement 7.5.1 aufgesteckt ist, das eine mittige Sechskantöffnung 7.5.1.1 aufweist. Die Buchse 5.6, nach Fig. 13 ist ein zylindrischer Hohlkörper mit einem stirnseitig angeformten Innengewinde 7.6.1, das mit einer radial eingeformten Sechskantöffnung 5.6.2 abschließt. Die stromführenden Teile des Anschlußsteckers 7.1 und der Anschlußdose 7.2 bestehen vorzugsweise aus einem gut leitfähigen Metall, wie beispielsweise Kupfer. Die Steckverbindung 7 wird wie folgt montiert:

Das zentrale Stromausführungskabel 6 wird durch das Verschlußteil 7.3 geführt. Ein ab isoliertes Drahtende des Kabels 6 wird in einen Drahthalter 7.4 gesteckt und dort mit der Schraube 7.4.3 in dem Drahthalter 7.4 festverschraubt. Dann wird das zweite ab isolierte Drahtende des Kabels 6 in einen zweiten Drahthalter 7.4 auf beschriebene Weise festgeschraubt. Die beiden, mit den Drahtenden des Stromausführungskabels 6 verbundenen Drahthalter 7.4 werden jeweils in einen Sechskant des Steckergehäuses 7.1.1 eingedrückt und das noch lose auf dem Kabel 6 sitzende Verschlußteil 7.3 wird auf die beiden Drahthalter 7.4 in die Stirnfläche des Steckergehäuses 7.1.1 gedrückt und vorzugsweise angeschraubt. Nun wird jeweils ein Polstift 7.5 mit dem Ende in dem das Innengewinde 7.5.2 angeordnet ist in die Hülsen 7.1.1.1 und 7.1.1.2 gesteckt und auf das jeweilige Außengewinde 7.4.1 der beiden Drahthalter 7.4 aufgeschraubt, bis die Polstifte 7.5 von den Hülsen 7.1.1.1 und 7.1.1.2 verdeckt und von außen nicht mehr sichtbar sind. Das Einschrauben der Polstifte 7.5 erfolgt mit Hilfe eines Sechskantschlüssels der in die Sechskantöffnung 7.5.1.1 des Polstifts 7.5 eingeführt wird und mit dem der Polstift 7.5 bis zum Anschlag drehbar und somit fest zu verschrauben ist.

Das Stromaufnahmekabel des Verbrauchers wird durch das Verschlußteil 7.3 geführt. Ein ab isoliertes Drahtende des Stromaufnahmekabels wird in einen Drahthalter 7.4 gesteckt und dort mit der Schraube 7.4.3 in dem Drahthalter 7.4 festverschraubt. Dann wird das zweite ab isolierte Drahtende des Kabels 6 in einen zweiten Drahthalter 7.4 auf beschriebene Weise festgeschraubt. Die beiden Drahthalter 7.4 werden jeweils in einen Sechskant des Buchsengehäuses 7.2 eingedrückt und das noch lose auf dem Stromaufnahmekabel des Verbrauchers sitzende Verschlußteil 7.3 wird auf die beiden Drahthalter 7.4 in die Stirnfläche des Buchsengehäuses 7.1.2 gedrückt und vorzugsweise angeschraubt. Nun wird jeweils eine Buchse 7.6 mit dem Ende, in dem das Innengewinde 7.6.1 angeordnet ist, in die Zylinder 7.2.1.1 und 7.2.1.2 des Buchsengehäuses 7.2 gesteckt und auf das jeweilige Außengewinde 7.4.1 der beiden Drahthalter 7.4 aufgeschraubt, bis die Buchsen 7.6 von den Zylindern 7.2.1.1 und 7.2.1.2 verdeckt und von außen nicht mehr sichtbar sind. Das Einschrauben der Buchsen 7.6 erfolgt mit Hilfe eines Sechskantschlüssels, der in die Sechskantöffnung 7.6.2 im Inneren der Buchse 7.6 eingeführt wird und mit dem die Buchse 7.6 bis zum Anschlag drehbar und somit fest zu verschrauben ist. Der am zentralen Stromausführungskabel 6 des Batteriesystems 0 montierte Anschlußstecker 7.1 kann nun mit der Anschlußdose 7.2 am Stromaufnahmekabel des Verbrauchers zu der Steckverbinung 7 verbunden werden.

Die stromführenden Teile der Steckverbindung unterliegen durch ständiges Aufladen und entladen des Batteriesystems 0 einem hohen mechanischen Verschleiß, der die Erwärmung der Steckverbindung 7 und eine Erhöhung des Widerstands zur Folge hat, der zu einem Leistungsabfall des Batteriesystems 0 führen kann. In diesem Fall können die verschlissenen Teile, wie die Polstifte 7.5 und die Buchsen 7.6 mit dem voran beschriebenen Sechskantsteckschlüssel aus dem Steckergehäuse 7.1.1 und dem Buchsengehäuse 7.1.2 herausgeschraubt und gegen neue Teile ersetzt werden, was zu großen Kosteneinsparungen für den Anwender führt, weil die Gehäuseteile der Steckverbindung nicht entfernt und ausgetauscht werden müssen. Außerdem müssen beim Austausch der Polstifte 7.5 und Buchsen 7.6 die Drähte der jeweiligen Kabel nicht gelöst werden.

### Aufstellung der verwendeten Bezugszeichen

- 0: Batteriesystem,
- 1: Batteriegehäuse,
- 1.1: Aufnahmeteil,
- 1.1.1: Akkufächer,
- 1.1.2: Aufnahmebereich,
- 1.1.3: Kabelausführungsbereich,
- 1.1.3.1: Kabelausführungsleiste,
- 1.2: Verschlußteil,
- 1.2.1: Trennwände,
- 1.2.2: Isolierflächen,
- 1.2.3: Kabelausfiihrungsleiste,
- 2: Lithium- Polymer- Akkumulatoren,
- 2.1: Balancerkabel,
- 2.1.1: Balancerstecker,
- 2.2: Stromausführungskabel,
- 2.2.1: zweipoliger Stecker,
- 3: Balancerschiene,
- 3.1: mehrpolige Steckerbuchse,
- 4: zentrales Balancerkabel,
- 4.1: Balancerstecker,
- 5: Stromschiene,
- 5.1: Kopplungselemente,
- 5.1.1: Steckbuchsen,
- 6: zentrales Stromausführungskabel,
- 6.1: Anschlußstecker,
- 7: Steckverbindung,
- 7.1: Anschlußstecker,
- 7.1.1: Steckergehäuse,
- 7.1.1.1: Hülse,
- 7.1.1.2: Hülse,
- 7.2: Anschlußdose,
- 7.2.1: Buchsengehäuse,
- 7.2.1.1: eingeformter Zylinder,
- 7.2.1.2: eingeformter Zylinder,
- 7.3: Verschlußteil,
- 7.3.1: Kabelführung,
- 7.4: Drahthalter,
- 7.4.1: Außengewinde,
- 7.4.2: Gewindeloch,
- 7.4.3: Schraube,
- 7.5: Polstift,
- 7.5.1: Federelement,
- 7.5.1.1: Sechskantöffnung,
- 7.5.2: Innengewinde,
- 7.6: Buchse,
- 7.6.1: Innengewinde,
- 7.6.2: Sechskantöffnung,
- 8: Dichtungs- und Verschlußelemente,
- 9: Sicherung

## Patentansprüche

1. Stecksystem zur Kombination von Lithium- Polymer- Akkumulatoren und deren Verbindung zu einem Batteriesystem (0) für den Antrieb eines Verbrauchers, bestehend aus einem Batteriegehäuse (1), zur Aufnahme einzelner Lithium- Polymer- Akkumulatoren (2) mit einem Stromausführungskabel (2.2) und zweipoligem Stecker (2.2.1) und einem Balancerkabel (2.1) mit Balancerstecker (2.1.1) und deren Verbindung zu einem Verbraucher oder einer Ladestation, **dadurch gekennzeichnet,**
**daß** ein zweiteiliges Batteriegehäuse (1) durch den Benutzer mit mehreren handelsüblichen Lithium- Polymer- Akkumulatoren (2) zu bestücken ist, deren mehrpolige Balancerstecker (2.1.1) mit einer Balancerschiene (3) und daran angeordneten, mit den Balancersteckern (2.1.1) kompatible mehrpolige Steckerbuchsen (3.1) mit einem zentralen Balancerkabel (4), und deren zweipolige Stecker (2.2.1) über Stromschienen (5) mit Kopplungselementen (5.1) und zu den zweipoligen Steckern (2.2.1) kompatiblen Steckbuchsen (5.1.1) mit einem zentralen Stromausführungskabel (6) durch Steckverbindungen zu einem Batteriesystem (0) zu verbinden sind, wobei das Batteriesystem (0) über das zentrale Balancerkabel (4) mit einem Balancerstecker (4.1) durch Steckverbindung an eine Ladestation oder über einen am Stromausführungskabel (6) angeschlossenen Anschlußstecker (6.1) jeweils durch Steckverbindung an einen Verbraucher anzuschließen ist,
**daß** im Batteriegehäuse (1) eine Schaltung anzuordnen ist, die als Balancer, zur Spannungsmessung, zum Stromausgleich und somit zum Aufladen der vollen Kapazität jeder einzelnen Zelle in den Lithium- Polymer- Akkumulatoren (2) während des Ladevorgangs, nutzbar ist und
**daß** die Speicher- und Leistungskapazitäten des Batteriesystems (0) durch Auswahl der Art und Anzahl der Lithium- Polymer- Akkumulatoren (2) dem jeweiligen Anwendungsbereich anzupassen ist, wobei die elektrischen Verbindungen nach Bedarf durch Reihen- oder Parallelschaltung schaltbar sind.

2. Stecksystem zur Kombination von Lithium- Polymer- Akkumulatoren und deren Verbindung zu einem Batteriesystem (0) für den Antrieb eines Verbrauchers nach Anspruch 1, **gekennzeichnet dadurch, daß** das Batteriegehäuse (1) aus einem Aufnahmeteil (1.1) und einem Verschlußteil (1.2) gebildet ist, wobei das Aufnahmeteil (1.1) mit mehreren, voneinander getrennten oben offenen Akkufächern (1.1.1), der Balancerschiene (3), dem zentralen Balancerkabel (4) mit Balanzerstecker (4.1), einem Aufnahmebereich (1.1.2) mit den Stromschienen (5), dem zentralen Stromausführungskabel (6) mit dem Anschlußstecker (6.1) sowie einem Kabelausführungsbereich (1.1.3) einer Kabelausführungsleiste (1.1.3.1) und mit Dichtungs- und Verschlußelementen (8) auf den Kanten des Aufnahmeteils (1.1) ausgestattet ist.

3. Stecksystem zur Kombination von Lithium- Polymer- Akkumulatoren und deren Verbindung zu einem Batteriesystem (0) für den Antrieb eines Verbrauchers nach Anspruch 2, **gekennzeichnet dadurch, daß** das Verschlußteil (1.2) des Batteriegehäuses (1) mit den Akkufächern (1.1.1) des Aufnahmeteils (1.1) korrespondierende Trennwände (1.2.1) und darin angeordnete Isolierflächen (1.2.2) und eine Kabelausführungsleiste (1.2.3) aufweist, die mit der Kabelausführungsleiste (1.1.3.1) des Aufnahmeteils (1.1) korrespondiert und mit den Dichtungs- und Verschlußelementen (8) auf den Kanten des Verschlußteils (1.2) ausgestattet ist.

4. Stecksystem zur Kombination von Lithium- Polymer- Akkumulatoren und deren Verbindung zu einem Batteriesystem (0) für den Antrieb eines Verbrauchers nach Anspruch 2, **gekennzeichnet dadurch, daß** die Balancerschiene (3) eine Platine ist, auf der die elektrischen Verbindungen zwischen den mehrpoligen Balancersteckern (2.1.1), den mehrpoligen Steckbuchsen (3.1) und dem zentralen Balancerkabel (4) aufgebracht sind, die unterhalb der Akkufächer (1.1.1) angeordnet ist und die Akkufächer (1.1.1) von dem Aufnahmebereich (1.1.2) des Aufnahmeteils (1.1) räumlich zu trennen sind.

5. Stecksystem zur Kombination von Lithium- Polymer- Akkumulatoren und deren Verbindung zu einem Batteriesystem (0) für den Antrieb eines Verbrauchers, nach Anspruch 2, **gekennzeichnet dadurch, daß** im Aufnahmebereich (1.1.2) des Aufnahmeteils (1.1) mindestens zwei der Stromschienen (5) mit jeweils mindestens zwei Kopplungselementen (5.1) und Steckbuchsen (5.1.1) als Gegenstück zu den zweipoligen Steckern (2.2.1) der Stromkabel (2.2) angeordnet sind, über die eine Verbindung der Lithium-Polymer- Akkumulatoren (2) zu dem zentralen Stromausführungskabel (6) mit dem Anschlußstecker (6.1) herzustellen ist.

6. Stecksystem zur Kombination von Lithium- Polymer- Akkumulatoren zu einem Batteriesystem (0) für den Antrieb eines Verbrauchers, nach Anspruch 2, **gekennzeichnet dadurch, daß** in dem Kabelausführungsbereich (1.1.3) das zentrale Stromausführungskabel (6) durch eine Sicherung (9) überbrückt ist und das zentrale Stromausführungskabel (6) mit dem Anschlußstecker (6.1) sowie das zentrale Balancerkabel (4) mit dem Balancerstecker (4.1) aus dem Batteriegehäuse (1) über die Kabelausführungsleiste (1.1.3.1) stabil herauszuführen sind.

7. Stecksystem zur Kombination von Lithium- Polymer- Akkumulatoren und deren Verbindung zu einem Batteriesystem (0) für den Antrieb eines Verbrauchers, nach einem der vorhergehenden Ansprüche, **gekennzeichnet dadurch, daß** das Batteriesystem (0) nach Bestückung mit den Lithium- Polymer-Akkumulatoren (2) und nach Ausführung der Steckverbindungen der Balancerkabel (2.1) über deren mehrpolige Balancerstecker (2.1.1) über die mehrteiligen Balancerbuchsen (3.1) der Balancerschiene (3) zum zentralen Balancerkabel (4) sowie der Steckverbindungen der zweipoligen Stromkabel (2.2) mit den zweipoligen Steckern (2.2.1), über die Stromschienen (5), deren Kopplungselemente (5.1) mit den zweipoligen Steckbuchsen (5.1.1) zum zentralen Stromausführungskabel (6), das zentrale Banlancerkabel (4) mit seinem Balancerstecker (4.1) und das zentrale Stromausführungskabel (6) mit dessen Anschlußstecker (6.1) in die Kabelausführungsleiste (1.1.3.1) des Aufnahmeteils (1.1) einzuklemmen, durch Aufsetzen des Verschlußteils (1.2) und dessen Kabelausführungsleiste (1.2.3) auf die Kabelausführungsleiste (1.1.3.1) des Aufnahmeteils (1.1) aufzustecken und über die Dichtungs- und Verschlußelemente (8) des Aufnahmeteils (1.1) und des Verschlußteils (1.2) zu verschließen sind.

8. Stecksystem zur Kombination von Lithium- polymer- Akkumulatoren und deren Verbindung zu einem Batteriesystem (0) für den Antrieb eines Verbrauchers, bestehend aus einem Batteriegehäuse (1), zur Aufnahme einzelner Lithium- Polymer- Akkumulatoren (2) mit einem Stromausführungskabel (2.2) und Stecker (2.2.1) und einem Balancerkabel (2.1) mit Balancerstecker (2.1.1) und deren Verbindung zu einem Verbraucher oder zu einer Ladestation, **gekennzeichnet dadurch,**
**daß** die Verbindung zwischen einem zentralen Stromausführungskabel (6) des Batteriesystems (0) und einem Verbraucher mit einer Steckverbindung (7) durchzuführen ist, die aus einem Anschlußstecker (7.1) und einer kompatiblen Anschlußdose (7.2) gebildet ist, die ein Steckergehäuse (7.1.1) mit zwei nebeneinander getrennt angeformten, Hülsen (7.1.1.1, 7.1.1.2) mit unterschiedlichen Außenkonturen und ein dazu kompatibles Buchsengehäuse (7.2.1) mit zwei nebeneinander eingeformten Zylindern (7.2.1.1, 7.2.1.2) mit jeweils unterschiedlichen Außenkonturen aufweisen,
**daß** in dem Steckergehäuse (7.1.1) und dem Buchsengehäuse (7.2.1) jeweils stirnseitig zwei getrennt nebeneinander eingeformte Sechskante zur Aufnahme von Drahthaltern (7.4) angeordnet sind, die jeweils mit einem Verschlußteil (7.3) mit nach außen angeformten Kabelführungen (7.3.1) zu verschließen sind und daß in dem Steckergehäuse (7.1.1) an jedem Drahthalter (7.4) von außen lösbar zu montierende Polstifte (7.5) und in dem Buchsengehäuse (7.2.1) von außen lösbar zu montierende Steckbuchsen (7.6.), von den angeformten, Hülsen (7.1.1.1, 7.1.1.2) und den kompatiblen Zylindern (7.2.1.1, 7.2.1.2) komplett umhüllt, angeordnet sind.

9. Stecksystem zur Kombination von Lithium- Polymer- Akkumulatoren und deren Verbindung zu einem Batteriesystem (0) für den Antrieb eines Verbrauchers, nach Anspruch 8, **gekennzeichnet dadurch, daß** der Drahthalter (7.4) die Form einer Sechskantmutter aufweist, in deren Wand ein Gewindeloch (7.4.2) radial angeordnet ist, in dem jeweils ein Draht des zentralen Stromausführunskabels (6) mit Hilfe einer Schraube zu befestigen ist und an deren Stirnseite in axialer Richtung ein Außengewinde (7.4.1) angeformt ist.

10. Stecksystem zur Kombination von Lithium- Polymer- Akkumulatoren und deren Verbindung zu einem Batteriesystem (0) für den Antrieb eines Verbrauchers, nach Anspruch 8, **gekennzeichnet dadurch, daß** der Pohlstift (7.5) mit einem aufgesteckten Federelement (7.5.1) mit einer endseitigen Sechskantöffnung (7.5.1.1) sowie mit einem an der gegenüberliegenden Stirnseite angeordneten Innengewinde (7.5.2) versehen ist und die Steckbuchse (7.6) mit einem endseitigen Innengewinde (7.6.1) und einer innerhalb der Steckbuchse (7.6) angeordneten Sechskantöffnung ausgestattet ist, wobei die Pohlstifte (7.5) und die Steckbuchsen (7.6) mittels des jeweiligen Innengewindes (7.5.2, 7.6.1) von außen und lösbar auf das Außengewinde (7.4.1) jedes Drahthalters (7.4) innerhalb der Gehäusehülsen (7.1.1.1, 7.1.1.2) des Steckergehäuses (7.1.1) und innerhalb der Zylinder (7.2.1.1, 7.2.1.2) des Buchsengehäuses (7.2.1) aufzuschrauben sind.
